# EUROPÄISCHE PATENTSCHRIFT

(11) **EP 2 718 057 B1**
(45) Veröffentlichungstag und Bekanntmachung des Hinweises auf die Patenterteilung: **18.05.2016**
(21) Anmeldenummer: 12704003.8
(22) Anmeldetag: 31.01.2012
(51) Int. Cl.: B23Q 11/00, B23Q 11/08

(54) **BEARBEITUNGSMASCHINE MIT EINER ABDECKUNG FÜR BEWEGLICHE TEILE**
MACHINE TOOL WITH A COVER FOR MOVING PARTS
MACHINE D'USINAGE AVEC UN ELEMENT DE RECOUVREMENT POUR PARTIES MOBILES

(30) Priorität: 06.06.2011 DE 202011101478 U
(43) Veröffentlichungstag der Anmeldung: 16.04.2014
(73) Patentinhaber: Trumpf Laser- und Systemtechnik GmbH, 71254 Ditzingen (DE)
(72) Erfinder: WALSTRA, Olga, 71254 Ditzingen (DE); SAUTER, Dietrich, 72555 Metzingen (DE)
(74) Vertreter: Prüfer & Partner mbB Patentanwälte · Rechtsanwälte
(86) Internationale Anmeldenummer: PCT/EP2012/051573
(87) Internationale Veröffentlichungsnummer: WO 2012/167956

(56) Entgegenhaltungen:
- EP-A1- 0 758 570
- EP-A1- 1 842 620
- DE-U1- 20 107 092
- US-A- 3 148 003

## Beschreibung

Die Erfindung betrifft eine Bearbeitungsmaschine, mit einer Abdeckung für bewegliche Teile einer Bearbeitungsmaschine, die bei einer Verschmutzung einem höheren Verschleiß ausgesetzt sind, wobei eine Beschädigung der Abdeckung durch die Verschmutzung verhindert werden soll.

Es sind Abdeckungen in Form von Faltenbälgen bekannt, die in Bearbeitungsmaschinen eingesetzt werden, um verschmutzungsempfindliche Bauteile, wie z.B. Führungselemente abzudecken. Dadurch wird ein Verschmutzen z.B. der Führungselemente verhindert und die Standzeit dieser beweglichen Teile wird erhöht.

Die Verschmutzungen, wie Schneidstaub oder Schneidreste, sammeln sich jedoch in den Falten der Faltenbälge und beschädigen die Faltenbälge. Durch ein Auseinander- und Zusammenziehen der Faltenbälge werden die Verschmutzungen in das Material des Faltenbalgs eingearbeitet und zerstören das Material durch Bilden von Löchern bzw. Rissen, die auch in kleinen Ausprägungen im Sinne von außerhalb der Materialspezifikationen liegenden Porositäten den Schutz vor Laserstrahlung, anderen Arbeitsmedien, wie Flüssigkeiten und/oder weiteren Stoffen, die die Standzeit der Führungselemente beeinflussen könnte, nicht mehr gewährleistet ist.

Dokument EP 0 758 570 A1 offenbart beispielsweise einen Faltenbalg mit senkrechen Flächen, an denen die Verschmutzungen abgleiten können.

Im Dokument EP 1 842 620 A1 ist eine längenveränderliche Abdeckung für Maschinenführungen offenbart, die in ihrem Querschnitt zwei Schenkel aufweist, die einen stumpfen Winkel einschließen, der bei einer vertikalen seitlichen Fläche größer als ein rechter Winkel ist.

Es ist Aufgabe der Erfindung, dieses Problem zu lösen, und insbesondere eine Bearbeitungsmaschine mit einer Abdeckung bereitzustellen, die ein Ablagern von Verschmutzungen auf der Abdeckung verhindert.

Die Aufgabe wird durch die Merkmale des Anspruchs 1 gelöst. Weiterbildungen der Erfindung sind Gegenstand der abhängigen Ansprüche.

Indem ein einer Verschmutzung ausgesetzter Abschnitt nicht horizontal vorgesehen ist, z.B. als eine Fläche in einer geneigten Ebene, die mit einer Horizontalen einen Winkel α einschließt, und indem die Oberfläche des der Verschmutzung ausgesetzten Abschnitts einen geringeren Reibungskoeffizienten µ als tan α aufweist, rutschen Verschmutzungen leicht von dem oberen Abschnitt ab, und somit wird die Abdeckung nicht beschädigt.

Die Erfindung wird mit Hilfe nachfolgender Ausführungsbeispiele anhand der beigefügten Zeichnungen erläutert.

Insbesondere zeigt:
- Fig. 1: eine Ansicht einer Abdeckung in einer Ausführungsform in einer Längsrichtung;
- Fig. 2: eine Ansicht der Abdeckung in einer weiteren Ausführungsform in der Längsrichtung;
- Fig. 3: eine Ansicht der Abdeckung in einer weiteren anderen Ausführungsform in der Längsrichtung;
- Fig. 4: eine Ansicht einer Abdeckung mit einem Dichtbereich in der Längsrichtung.

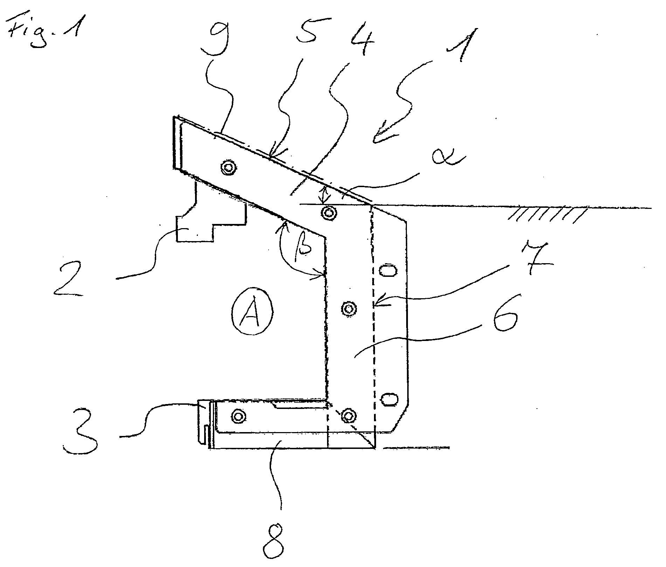

Fig. 1 zeigt den Aufbau eines Faltenbalgs als Ausführungsbeispiel einer länglichen längenveränderlichen Abdeckung 1 für Teile von einer Bearbeitungsmaschine, beispielsweise von einer Laserschneidmaschine oder von einer Laserschweißmaschine. Ein weiteres Ausführungsbeispiel für die Abdeckung 1 ist beispielsweise eine längenveränderliche Abdeckung aus mehreren Teilen, die teleskopartig zusammenschiebbar sind. Die Abdeckung 1 deckt einen Schutzbereich A ab, so dass keine Späne oder sonstige Verschmutzung in den Schutzbereich A eindringen können. Die Abdeckung 1 ist in Fig. 1 so dargestellt, dass die Ansicht in Richtung der Längsrichtung der Abdeckung 1 ist.

Die Abdeckung 1 weist Befestigungsmittel 2, 3 auf, mit denen die Abdeckung 1 an der Bearbeitungsmaschine angebracht wird.

Die Abdeckung 1 weist weiterhin hier einen oberen, der Verschmutzung ausgesetzten Abschnitt 4 mit einer Oberfläche 5 auf. An den oberen Abschnitt 4 schließt sich ein seitlicher Abschnitt 6 an. Der seitliche Abschnitt 6 weist eine seitliche Fläche 7 auf. Die Abdeckung 1 ist so in der Bearbeitungsmaschine eingebaut, dass die seitliche Fläche 7 vertikal angeordnet ist. Alternativ muss die seitliche Fläche 7 nicht vertikal angeordnet sein, sondern kann auch beliebig geneigt sein und eine beliebige Form aufweisen, solange der seitliche Abschnitt 6 den Schutzbereich A seitlich abdeckt. Der seitliche Abschnitt 6 kann alternativ auch aus zwei Teilabschnitten mit jeweils einer Teilfläche gebildet sein, wobei die Teilflächen einen Winkel zueinander einschließen, so dass die Teilflächen den Schutzbereich in der Längsrichtung gesehen einschließend umgeben, d.h. sich Normale der Teilflächen in dem Schutzbereich A schneiden. Je nach Ausführung der Bearbeitungsmaschine kann der seitliche Abschnitt 6 ausschließlich oder zusätzlich zu dem oberen Abschnitt 4 der der Verschmutzung ausgesetzte Abschnitt sein.

Am unteren Ende des seitlichen Abschnitts 6 schließt sich ein unterer Abschnitt 8 an, der den Schutzbereich A von unten abdeckt. Der untere Abschnitt 8 und/oder der seitliche Abschnitt 6 können, sofern nicht zum Abdecken des Schutzbereichs A erforderlich, weggelassen werden.

Die Abdeckung 1 ist in der Bearbeitungsmaschine so eingebaut, dass die Oberfläche 5 nicht horizontal angeordnet ist, also mit einer Horizontalen einen Winkel α einschließt, der nicht 0° beträgt. Die Oberfläche 5 schließt mit der seitlichen vertikalen Fläche 7 einen Winkel β ein, der in dieser Ausführungsform größer als ein rechter Winkel ist. Falls alternativ die seitliche Fläche 7 nicht vertikal angeordnet ist, kann der Winkel zwischen der Oberfläche 5 und der seitlichen Fläche 7 auch zwischen 0° und 180° sein.

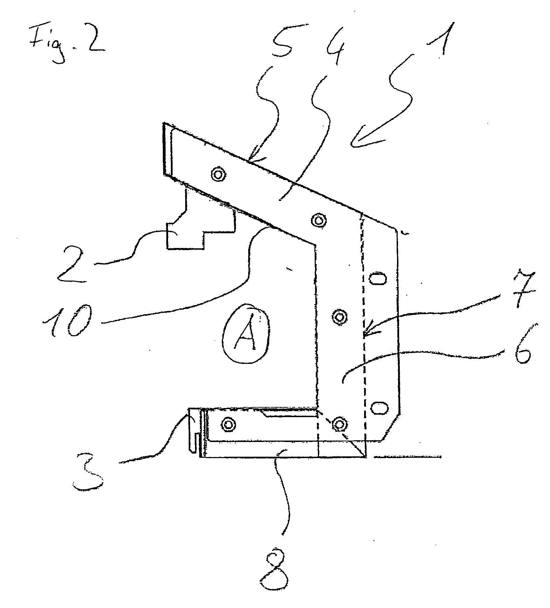

Der obere, der Verschmutzung ausgesetzte Abschnitt 4 weist in der ersten Ausführungsform (gezeigt in Fig. 2) an der Oberfläche 5 einen Reibungskoeffizienten auf, der so gering ist, dass Partikel der Verschmutzung von selbst leicht abrutschen können. Dazu muss die Abtriebskraft der Partikel größer als die Reibungskraft zwischen den Partikeln und der Oberfläche sein. Dies ist durch den Ausdruck µ < tan α ausdrückbar. Wenn also der Reibungskoeffizient µ der Oberfläche 5 kleiner als der Tangens des Winkels α ist, den die Oberfläche 5 mit der Horizontalen einschließt, rutscht die Verschmutzung von der Oberfläche 5 ab. Ein sehr leichtes Abrutschen ist bei einer Bedingung von µ < 0,2 · tan α gewährleistet.

In einer in Fig. 1 gezeigten Ausführungsform weist der obere, der Verschmutzung ausgesetzte Abschnitt 4 in an der Oberfläche 5 eine Beschichtung 9 auf, deren Reibungskoeffizient die Bedingung µ < tan α erfüllt. Die Beschichtung 9 kann entweder direkt auf die Oberfläche 5 als eine sich mit der Oberfläche 5 verbindende Beschichtung, oder alternativ auch beispielsweise als zusätzliche Materialdecklagen, z.B. Metalllamellen, aufgebracht werden.

In weiteren Ausführungsformen hat die Oberfläche 5 selbst oder die Beschichtung 9 einen geringeren Reibungskoeffizienten µ als die Fläche 7 des seitlichen Abschnitts 6 und eine Fläche des unteren Abschnitts 8.

Als Beschichtung ist alternativ Polytetrafluorethen (PTFE) mit dem Handelsnamen Teflon einsetzbar. PTFE hat einen geringen Reibungskoeffizienten und ist darüber hinaus strahlungsreflektierend und fluidundurchlässig.

Durch die geneigte, nicht horizontale Anordnung der Oberfläche 5 mit dem Reibungskoeffizient, der die Bedingung µ < tan α erfüllt, und gegebenenfalls das Vorsehen der Beschichtung 9 mit dem Reibungskoeffizient, der die Bedingung µ < tan α erfüllt, rutschen Späne und sonstige Verunreinigungen von der Oberfläche 5 ab. Bei der Ausführungsform der Abdeckung 1 in Form des Faltenbalgs werden die Späne und die Verunreinigungen beim Zusammendrücken des Faltenbalgs nicht in das Material eingedrückt, und somit kann die Abnutzung des Faltenbalgs reduziert werden. Bei der Ausführungsform der Abdeckung 1 in Form von teleskopartig zusammenschiebbaren Teilen wird ein Verkratzen der Flächen der Abdeckung 1 verhindert.

Je steiler die Oberfläche 5 angeordnet ist, je größer also der Winkel α ist, umso mehr wird das Abrutschen der Verunreinigungen begünstigt.

Fig. 2 zeigt eine weitere Ausführungsform der Abdeckung 1. Die Elemente der weiteren Ausführungsform, die denen der ersten Ausführungsform entsprechen, sind mit den gleichen Bezugszeichen versehen und werden nicht nochmals beschrieben.

Der Unterschied zwischen den Ausführungsformen liegt darin, dass in einer Ausführungsform eine Beschichtung 9 (Fig. 1) der Oberfläche 5 vorgesehen ist, um ein Abrutschen von Verschmutzungen zu erleichtern. In der anderen Ausführungsform besteht die Abdeckung 1 hingegen aus einem Material, dessen gegenüberliegende Flächen verschiedene Reibungskoeffizienten aufweisen. Das Material ist dann in der Abdeckung 1 so eingebaut, dass sich zumindest in dem oberen Abschnitt 4 die Fläche des Materials mit dem geringeren Reibungskoeffizienten an der Oberfläche 5 befindet, und die Fläche mit dem größeren Reibungskoeffizienten an einer Fläche 10, die in der Abdeckung 1 innenliegend dem Schutzbereich A zugewandt ist, vorgesehen ist. Alternativ weist auch die Beschichtung einen geringeren Reibungskoeffizienten µ als die Fläche 10 auf.

Durch die Anordnung der Oberfläche 5 so, dass die Oberfläche 5 nicht horizontal ist, und das Anordnen des Materials so, dass die Fläche mit dem geringeren Reibungskoeffizienten µ die Oberfläche 5 bildet, rutschen Späne und sonstige Verunreinigungen von der Oberfläche 5 ab, und können somit bei einem Faltenbalg als der Abdeckung 1 nicht beim Zusammendrücken des Faltenbalgs in das Material eingedrückt werden, und somit kann die Abnutzung des Faltenbalgs reduziert werden.

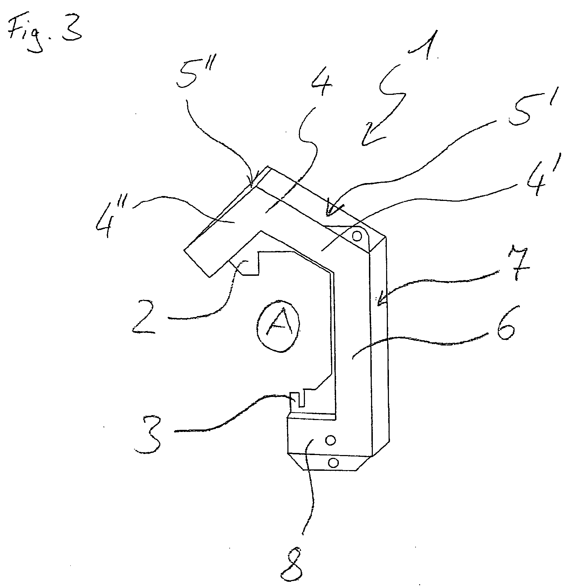

In Fig. 3 ist eine weitere andere Ausführungsform der Abdeckung 1 gezeigt. Die Elemente der dritten Ausführungsform, die denen der ersten und der zweiten Ausführungsform entsprechen, sind mit den gleichen Bezugszeichen versehen und werden nicht nochmals beschrieben.

Der Unterschied zwischen den vorherigen Ausführungsformen und der Ausführungsform in Fig. 3 liegt darin, dass in den vorherigen Ausführungsformen die Oberfläche 5 des oberen Abschnitts 4 als eine stetige Fläche ausgebildet ist, um ein Abrutschen von Verschmutzungen zu erleichtern. In der dritten Ausführungsform ist der Abschnitt 4 mit der Oberfläche 5 so gestaltet, dass er aus zwei Teilabschnitten 4' und 4" mit zwei Teilflächen 5' und 5" besteht, die entlang der Längsrichtung der Abdeckung 1 einen Winkel miteinander einschließen. Dadurch bilden die Teilflächen 5' und 5" eine nach außen hin abfallende Dachform des oberen Abschnitts 4.

Durch die Dachform wird das Abrutschen von Verschmutzungen begünstigt, da die abfallenden Längen der einzelnen Teilflächen 5' und 5" geringer sind. Diese Ausführungsform ist dann bevorzugt zu verwenden, wenn in der Längsrichtung der Abdeckung 1 auf beiden Seiten die Möglichkeit gegeben ist, dass die Verschmutzungen von den Teilflächen 5' und 5" wegfallen können.

Die Oberfläche 5 des der Verschmutzung ausgesetzten Abschnitts 4 und die durch die Dachform gebildeten Teilflächen (5', 5") sind in alternativen Ausführungsformen derart ausgeführt, dass die Partikel der Verschmutzungen in einen Bereich fallen, indem sich keine bewegten Flächen der Abdeckung 1 befinden. Neben einer Ableitung der Partikel in Richtung eines Maschinenbetts bzw. in einen Bereich der Reststoffsammlung kann auch ein separater Sammelkanal vorgesehen sein, der in einer Variante an eine Absaugung angeschlossen ist. Das Abgleiten von Verschmutzungen entlang der Flächen 5, 5', 5" wird zudem durch die Zuführung von gerichteten Luftströmen unterstützt. Hierzu können vorhandene Luftströme bzw. Teile davon durch geeignete Ablenkeinrichtungen oder eigens hierfür vorgesehen Luftzuführeinrichtungen genutzt werden.

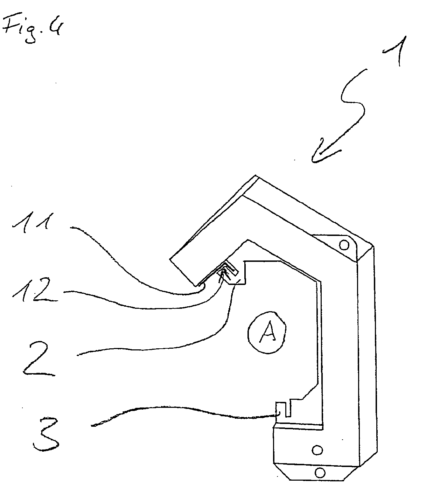

In Fig. 4 ist eine Abdeckung 1 gezeigt, die in Längsrichtung eine Führung 11 aufweist. Die Führung 11 ist an der Bearbeitungsmaschine angebracht. In dem Befestigungsmittel 2 der Abdeckung 1 ist in dieser Ausführungsform eine Aussparung vorhanden, in die die Führung 11 eingreift, und gemeinsam mit der Führung 11 einen Dichtbereich 12 bildet. Durch den Dichtbereich 12 wird der Schutzraum A, der vom der Abdeckung 1 umschlossen ist, von der Umgebung abgekapselt, und somit wird das Eindringen von Verschmutzungen in den Schutzraum verstärkt verhindert, so dass der Schutzraum abgekapselt ist, um unter Anderem einen vom Inneren der Abdeckung 1 ausgehenden Verschleiß zu verhindern.

## Patentansprüche

1. Bearbeitungsmaschine mit einer längenveränderlichen Abdeckung (1) für Teile dei Bearbeitungsmaschine zum Schutz gegen eine Verschmutzung, mit mindestens einem der Verschmutzung ausgesetztem Abschnitt (4), wobei bei der Abdeckung (1)
der zumindest eine der Verschmutzung ausgesetzte Abschnitt (4) in bestimmungsgemäßer Montageposition in der Bearbeitungsmaschine nicht in einem Winkel α = 0° zu einer Horizontalen angeordnet ist, und der der Verschmutzung ausgesetzte Abschnitt (4) eine Oberfläche (5) aufweist, die einen Reibungskoeffizienten (µ) hat, der kleiner als tan α ist,
wobei der der Verschmutzung ausgesetzte Abschnitt (4) ein oberer Abschnitt ist, an den sich ein seitlicher Abschnitt (6) mit einer seitlichen Fläche (7) anschließt,
die Oberfläche (5) mit der seitlichen Fläche (7) einen Winkel β einschließt, und
der Winkel β bei einer vertikalen seitlichen Fläche (7) größer als ein rechter Winkel ist,
**dadurch gekennzeichnet, dass** die Bearbeitungsmaschine mit einer Einrichtung zum Führen von Luftströmen versehen ist, und die Einrichtung so angepasst ist, dass mindestens ein Luftstrom ein Abgleiten der Verschmutzung entlang der Oberfläche (5) unterstützt.

2. Bearbeitungsmaschine gemäß Anspruch 1, **dadurch gekennzeichnet, dass** der Reibungskoeffizient (µ) der Oberfläche (5) des mindestens einem der Verschmutzung ausgesetzten Abschnitts (4) geringer als ein Reibungskoeffizient (µ) einer sonstige Fläche (7) ist.

3. Bearbeitungsmaschine gemäß Anspruch 1 oder 2, **dadurch gekennzeichnet, dass** die Oberfläche (5) mit einer rutschfördernden Beschichtung (9) mit einem Reibungskoeffizient (µ), der kleiner als tan α ist, versehen ist.

4. Bearbeitungsmaschinegemäß Anspruch 1 oder 2 **dadurch gekennzeichnet, dass** eine Außenseite der Abdeckung (1) einen geringeren Reibungskoeffizienten (µ) als eine Innenseite der Abdeckung (1) aufweist.

5. Bearbeitungsmaschinegemäß einem der vorangehenden Ansprüche, **dadurch gekennzeichnet, dass** der der Verschmutzung ausgesetzte Abschnitt (4) in einer Längsrichtung mindestens zwei Teilabschnitte (4', 4") mit zwei Teilflächen (5', 5") aufweist, und die Teilflächen (5', 5") einen solchen Winkel zueinander einschließen, so dass die Teilflächen (5' 5") eine nach außen abfallende Dachform bilden.

6. Bearbeitungsmaschinegemäß einem der vorangehenden Ansprüche, **dadurch gekennzeichnet, dass** der der Verschmutzung zugewandte Abschnitt auch seitlich angeordnet ist, und der seitliche Abschnitt (6) in einer Längsrichtung mindestens zwei Teilabschnitte mit zwei Teilflächen aufweist, und die Teilflächen einen solchen Winkel zueinander einschließen, so dass sich die jeweilige Normale der Teilflächen in dem Schutzbereich (A) schneiden.

7. Bearbeitungsmaschinegemäß einem der vorangehenden Ansprüche, **dadurch gekennzeichnet, dass** die Abdeckung (1) als ein Faltenbalg ausgebildet ist.

8. Bearbeitungsmaschinegemäß den Ansprüchen 5 oder 6, und 7, **dadurch gekennzeichnet, dass** die Teilflächen (5', 5") des Faltenbalgs mit einer zusätzlichen Materialdecklage (9) versehen sind.

9. Bearbeitungsmaschinegemäß Anspruch 7 oder 8, **dadurch gekennzeichnet, dass** der Faltenbalg eine Führung (11) aufweist, und ein Bereich des Faltenbalgs so ausgebildet ist, dass der Bereich zusammen mit der Führung (11) einen Dichtbereich (12) ausbildet, so dass durch den Dichtbereich (12) keine Verschmutzung in einen Schutzbereich (A) des Faltenbalgs eindringen kann.

10. Bearbeitungsmaschine gemäß einem der Ansprüche 1 bis 9, **dadurch gekennzeichnet, dass** die Bearbeitungsmaschine mit einer Einrichtung zum Absaugen versehen ist, die Partikel der abgerutschten Verschmutzung aus einem Sammelkanal absaugt.

## Claims

1. Processing machine with a length-variable cover (1) for parts of the processing machine for protection against soiling, having at least one portion (4) exposed to the soiling, wherein, on the cover (1),
the at least one portion (4) exposed to the soiling, in the intended installation position in the processing machine, is not arranged at an angle α = 0 degrees with respect to a horizontal, and the portion (4) exposed to the soiling comprises a surface (5) having a friction coefficient (µ) lower than tan α,
wherein the portion (4) exposed to the soiling is an upper portion to which a lateral portion (6) having a lateral face (7) joins,
the surface (5) and the lateral face (7) include an angle β, and
in the case of a vertical lateral face (7), the angle β is larger than a square angle,
**characterized in that** the processing machine is provided with a device for guiding airstreams, and the device is configured such that at least one airstream assists the soiling in slipping off along the surface (5).

2. Processing machine according to claim 1, **characterized in that** the friction coefficient (µ) of the surface (5) of the at least one portion (4) exposed to the soiling is lower than a friction coefficient (µ) of another face (7).

3. Processing machine according to claim 1 or 2, **characterized in that** the surface (5) is provided with a slide-promoting coating (9) having a friction coefficient (µ) lower than tan α.

4. Processing machine according to claim 1 or 2, **characterized in that** an outside of the cover (1) has a lower friction coefficient (µ) than an inside of the cover (1).

5. Processing machine according to any of the preceding claims, **characterized in that** the portion (4) exposed to the soiling comprises at least two sections (4', 4") having two subareas (5', 5") in a longitudinal direction, and the subareas (5', 5") include an angle with respect to each other such that the subareas (5', 5") form an outwardly slanting roof shape.

6. Processing machine according to any of the preceding claims, **characterized in that** the portion exposed to the soiling is also laterally arranged, and the lateral portion (6) comprises at least two sections having two subareas in a longitudinal direction, and the subareas include an angle with respect to each other such that the respective perpendiculars intersect within the protection area (A).

7. Processing machine according to any of the preceding claims, **characterized in that** the cover (1) is formed as a bellows.

8. Processing machine according to claims 5 or 6, and 7, **characterized in that** the subareas (5', 5") of the bellows are provided with an additional material top layer (9).

9. Processing machine according to claim 7 or 8, **characterized in that** the bellows comprises a guide (11), and a section of the bellows is configured such that, together with the guide (11), the section forms a sealing section (12) such that, due to the sealing section (12) no soiling can enter into the protection area (A) of the bellows.

10. Processing machine according to any of the claims 1 to 9, **characterized in that** the processing machine is provided with a device for sucking which sucks the particles of the slipped off soiling out of a collection channel.

## Revendications

1. Machine d'usinage équipée d'un élément de recouvrement (1) de longueur variable de parties de la machine d'usinage pour les protéger contre un encrassement, comprenant au moins un segment (4) exposé à l'encrassement, dans laquelle, dans l'élément de recouvrement (1) le segment (4) exposé à l'encrassement ne fait pas un angle α = 0° par rapport à l'horizontale dans la position de montage correcte dans la machine d'usinage, et le segment (4) exposé à l'encrassement comprend une surface (5) qui a un coefficient de friction (µ) supérieur à tan α,
le segment (4) exposé à l'encrassement est un segment supérieur auquel se connecte un segment latéral (6) ayant une surface latérale (7),
la surface supérieure (5) définit un angle (3 avec la surface latérale (7), et lorsque la surface latérale (7) est verticale, l'angle β est supérieur à un angle droit,
**caractérisée en ce que**
la machine d'usinage est équipée d'un dispositif de guidage des courants d'air et ce dispositif est réalisé de sorte qu'au moins un courant d'air assiste une évacuation par glissement de l'encrassement le long de la surface supérieure (5).

2. Machine d'usinage conforme à la revendication 1,
**caractérisée en ce que**
le coefficient de friction (µ) de la surface (5) du segment (4) exposé à l'encrassement est plus faible que le coefficient de friction (µ) de l'autre surface (7).

3. Machine d'usinage conforme à la revendication 1 ou 2,
**caractérisée en ce que**
la surface (5) est munie d'un revêtement favorisant le glissement (9) ayant un coefficient de friction (µ) qui est inférieur à tan α.

4. Machine d'usinage conforme à la revendication 1 ou 2,
**caractérisée en ce que**
la face externe de l'élément de recouvrement (1) a un coefficient de friction (µ) plus faible que celui de la face interne de cet élément de recouvrement (1).

5. Machine d'usinage conforme à l'une des revendications précédentes,
**caractérisée en ce que**
le segment (4) exposé à l'encrassement comporte, en direction longitudinale, au moins deux segments partiels (4', 4") ayant deux surfaces partielles (5', 5"), ces surfaces partielles (5', 5") définissant entre elles un angle tel qu'elles définissent la forme d'un toit descendant vers l'extérieur.

6. Machine d'usinage conforme à l'une des revendications précédentes,
**caractérisée en ce que**
le segment tourné vers l'encrassement est également monté latéralement, le segment latéral (6) comprend, en direction longitudinale au moins deux segments partiels ayant deux surfaces partielles et ces surfaces partielles définissent, entre elles un angle tel que les normales respectives de celle-ci se coupent dans la zone de protection (A).

7. Machine d'usinage conforme à l'une des revendications précédentes,
**caractérisée en ce que**
l'élément de recouvrement (1) est réalisé sous la forme d'un soufflet.

8. Machine d'usinage conforme aux revendications 5 ou 6 et 7,
**caractérisée en ce que**
les surfaces partielles (5', 5") du soufflet sont équipées d'une couche de revêtement de matière supplémentaire (9).

9. Machine d'usinage conforme à la revendication 7 ou 8,
**caractérisée en ce que**
le soufflet comporte un guidage (11) et une zone du soufflet est réalisée de sorte que cette zone forme avec le guidage (11) une zone étanche (12) de sorte qu'aucun encrassement ne puisse pénétrer dans une zone de protection (A) du soufflet par cette zone étanche (12).

10. Machine d'usinage conforme à l'une des revendications 1 à 9,
**caractérisée en ce qu'**
elle est équipée d'un dispositif d'aspiration permettant d'aspirer des particules d'encrassement ayant glissé pour les extraire d'un canal collecteur.
